# EUROPÄISCHE PATENTANMELDUNG

(11) **EP 2 017 389 A2**
(43) Veröffentlichungstag der Anmeldung: **21.01.2009**
(21) Anmeldenummer: 08010988.7
(22) Anmeldetag: 17.06.2008
(51) Int. Cl.: E02B 3/02, E02B 8/02

(54) **Verbauungsvorrichtung für fliessende Gewässer**

(30) Priorität: 17.07.2007 CH 11712007
(71) Anmelder: Geobrugg AG, 8590 Romanshorn (CH)
(72) Erfinder: Wartmann, Stephan, 8594 Güttingen (CH)
(74) Vertreter: Luchs, Willi

(57) **Zusammenfassung**

Die Erfindung betrifft eine Verbauungsvorrichtung für fliessende Gewässer und Gerinne jeglicher Art, insbesondere für Wildbäche und ähnliche Flussläufe, mit einem flexiblen Sperrelement in Gestalt eines Auffangnetzes (4) , das von eine Uferflanke (2) zur anderen Uferflanke (3) quer zur Flussrichtung (7) sich erstreckt. Das Auffangnetz (4) ist zwischen einem unteren Tragseil (5) und einem oberen Tragseil (6) aufgespannt. Die Tragseile (5, 6) sind in den Uferflanken (2, 3) mit an ihren Enden angebrachten Seilankern (8, 9) verankert, wobei die Seilanker (9) des oberen Tragseils (6) relativ zu den Seilankern (8) des unteren Tragseils (5) in Flussrichtung (7) nach vorne versetzt sind. Dadurch kann sich das Auffangnetz (4) bei gefüllter Sperre so verformen, dass das dann überfliessende Wasser, Geschiebe, Treibgut usw. das Netz nicht oder nur geringfügig überspült. Damit ist er dauerhaft gegen die Korrosions- und Abrasionswirkung des darüberströmenden Wasserflusses sicher geschützt.

## Beschreibung

Die Erfindung betrifft eine Verbauungsvorrichtung für fliessende Gewässer und Gerinne jeglicher Art, insbesondere für Wildbäche und ähnliche Flussläufe, mit einem flexiblen Sperrelement für Geschiebe-, Schwimm- und Treibgut, das zwischen den Uferflanken quer zur Flussrichtung aufgespannt ist.

Eine Verbauungsvorrichtung dieser Art ist in der deutschen Gebrauchsmusterschrift DE 203 00 821 beschrieben. Derartige Vorrichtungen dienen bekanntlich dazu, zum Schutz vor den zerstörenden Auswirkungen eines hochwasserführenden Wildbaches die Energie des abfliessenden Wasser zu reduzieren und dadurch sowohl die Ufererosion als auch den Transport von Geschiebe-, Schwimm- und Treibgut einzudämmen. Die bekannte Verbauungsvorrichtung bildet mit ihrem als Sperrelement dienenden Auffangnetz ein flexibles Sperrsystem, das eine grosse Energieabsorptionskapazität aufweist und zudem unbeschädigt bleibt bei Überfliessen der Vorrichtung.

Wenn man aber bei voller Sperre diese verfüllt lässt und nicht ausbaggert, führt dann dauernder Wasserfluss über das Auffangnetz und die als Halterungs- und Spannelemente vorgesehene Tragseile zum Abtrag des Oberflächenschutzes dieser Teile, was auf Dauer die Zerstörung der Sperre infolge der Korrosion und Abrasion ihrer wichtigsten Elemente verursacht. Um die Korrosion der Tragseile zu verhindern, ist es bekannt, Korrosionsschutzdrähte aus Stahl zu verwenden, die mit beschichtet sind. Das Auffangnetz selbst bleibt gegen die Abrasions- und Korrosionswirkung des dauernden Wasserflusses weitgehend ungeschützt.

Der Erfindung liegt die Aufgabe zugrunde, diesen Nachteil zu verhindern und eine Verbauungsvorrichtung der eingangs genannten Art zu schaffen, deren Sperrelement bei gefüllter Sperre gegen die langzeitige Korrosions- und Abrasionswirkung des überströmenden Wasserflusses geschützt ist.

Diese Aufgabe wird erfindungsgemäss dadurch gelöst, dass sich das flexible Sperrelement beim Befüllen der Sperre so verformt, dass bei gefüllter Sperre das überfliessende Material das Sperrelement talseitig nicht oder nur geringfügig überspült. Auf diese Weise wird erreicht, dass das dann darüberfliessende Wasser, Feinmaterial, Blöcke und desgleichen das Sperrelement talseitig nicht oder nur geringfügig tangieren. Damit ist es dauerhaft gegen die Korrosions- und Abrasionswirkung des darüberströmenden Wasserflusses sicher geschützt.

Die Erfindung betrifft ferner eine Verbauungsvorrichtung mit einem das Sperrelement bildenden Auffangnetz, das zwischen einem unteren und einem oberen Tragseil und optional mit Zwischenseilen quer zur Flussrichtung aufgespannt ist, wobei die Tragseile in den Uferflanken mit an ihren Enden angebrachten Seilankern oder anderen Seilverankerungen verankert sind.

Zur Lösung der erfindungsgemässen Aufgabe ist es hier nach der Erfindung vorgesehen, dass die Seilanker oder Seilverankerungen des oberen Tragseils relativ zu den Seilankern oder Seilverankerungen des unteren Tragseils in Flussrichtung nach vorne versetzt sind. Dadurch erhält das Auffangnetz die erforderliche Einbaulage, damit es sich nachher beim Befüllen der Sperre so verformt, dass das darüberfliessende Material das Auffangnetz talseitig nicht oder nur geringfügig tangiert.

Je nach dem Flexibilitätsgrad des Auffangnetzes und den Einsatzbedingungen der Sperre ist es zweckmässig, die Seilanker des oberen Tragseils relativ zu den Seilankern des unteren Tragseils soweit nach vorne zu versetzen, dass das unverformte, ebene Auffangnetz um einen Winkel von vorzugsweise 10° bis 45° in Flussrichtung nach vorne geneigt ist.

Die Erfindung betrifft auch eine weitere Verbauungsvorrichtung der eingangs genannten Art, deren das Sperrelement bildende Auffangnetz eine mittlere Zone und zwei diese zum Ufer hin zunehmend überragende Uferzonen aufweist und zwischen einem unteren und einem oberen Tragseil und optional mit Zwischenseilen quer zur Flussrichtung aufgespannt ist, wobei die Tragseile durch zwei die mittlere Zone in der Breite begrenzende Stützen geführt sind. Diese Stützen werden vorzugsweise gelenkig gelagert und mit Rückhalteseilen gegen hinten verankert.

Zur Lösung der erfindungsgemässen Aufgabe wird in diesem Falle vorgeschlagen, die Stützen so anzuordnen, dass sie in Flussrichtung relativ zur Vertikalen nach vorne geneigt sind. Dadurch erhält das Auffangnetz in der mittleren Zone die erforderliche Einbaulage, damit es sich in dieser Zone bei Befüllen der Sperre so verformt, dass ihn dort das überfliessende Material talseitig nicht tangiert. Auf diese Weise kann das Auffangnetz gezielt in dem Bereich des Netzes geschützt werden, der bei Überlaufen der Sperre den höchsten Fliessgeschwindigkeiten und somit den stärksten Abrasionseinflüssen durch Wasser und Geschiebe ausgesetzt ist.

Entsprechend dem Flexibilitätsgrad des Netzes und den Einsatzbedingungen der Sperre ist es hier zweckmässig, die Stützen mit einem Neigungswinkel von vorzugsweise 10° bis 30° aus der Vertikalen zu montieren.

Um den dauerhaften Schutz der Systemelemente im oberen Bereich der Sperre zu optimieren, sieht die Erfindung vor, dass über den oberen Randbereich des Auffangnetzes ein Überfallschutz einsetzbar ist. Der Überfallschutz hat die Aufgabe, das überfliessende Material über die Sperre so zu leiten, dass dieses Material das Auffangnetz talseitig nicht tangiert.

Erfindungsgemäss ist der Überfallschutz durch ein abgekantetes Blechprofil oder ein an die oberen Tragseile angehängtes Schutzblech gebildet, das vorzugsweise bei verfüllter Sperre auf den oberen Rand des Auffangnetzes montiert wird.

Weitere bevorzugte Ausgestaltungen der erfindungsgemässen Vorrichtung bilden den Gegenstand der Ansprüche 8 bis 10.

Die Erfindung wird nachfolgend anhand zweier Ausführungsbeispiele unter Bezugnahme auf die Zeichnung näher erläutert. Es zeigen:
- Fig. 1: eine erfindungsgemässe Verbauungsvorrichtung, in der Vorder- ansicht dargestellt,
- Fig. 2: einen schematisch dargestellten Querschnitt durch die Vorrich- tung aus Fig. 1 vor Befüllen der Sperre,
- Fig. 3: den schematischen Querschnitt aus Fig. 2 bei gefüllter Sperre,
- Fig. 4: einen schematischen Querschnitt durch eine Verbauungsvorrich- tung nach dem Stand der Technik vor Befüllen der Sperre,
- Fig. 5: den Querschnitt aus Fig. 4 bei gefüllter Sperre.
- Fig. 6: eine weitere erfindungsgemässe Verbauungsvorrichtung, in der Vorderansicht dargestellt,
- Fig. 7: einen Querschnitt durch die Vorrichtung aus Fig. 6 vor dem Be- füllen der Sperre,
- Fig. 8: den Querschnitt aus Fig. 7 bei gefüllter Sperre, und
- Fig. 9: den Querschnitt aus Fig. 3 mit einem Überfallschutz für den o- beren Randbereich der Sperre.

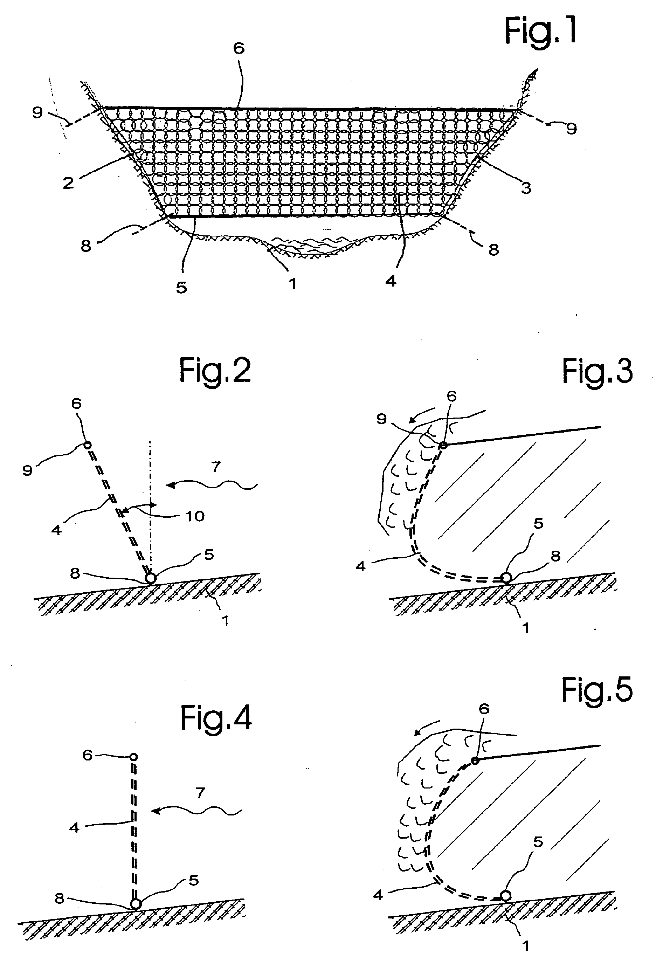

Die in den Fig. 1 bis 3 gezeigte Verbauungsvorrichtung ist in einem Fluss oder Gerinne mit einem Flussbettboden 1 und zwei Uferflanken 2, 3 angeordnet. Sie weist ein flexibles Sperrelement für Geschiebe, Schwimm- und Treibgut in Gestalt eines Auffangnetzes 4 auf, das sich von der Uferflanke 2 zur Uferflanke 3 erstreckt und zwischen einem unteren Tragseil 5 und einem oberen Tragseil 6 quer zur Flussrichtung 7 aufgespannt ist. Die Tragseile 5 und 6 sind in den Uferflanken 2, 3 mit an ihren Enden angebrachten Seilankern 8, bzw. 9 verankert, wobei die Seilanker 9 des oberen Tragseils 6 relativ zu den Seilankern 8 des unteren Tragseils 5 in Flussrichtung 7 nach vorne versetzt sind.

Das Auffangnetz 4 ist als flexibles Ring- oder Spiralseilnetz ausgebildet, das im aufgespannten Zustand vor Befüllen der Sperre annähernd eben ist und beim Befüllen der Sperre aufgrund seiner Flexibilität sich in Flussrichtung wölbend sich verformt. Diese beiden Zustände sind in den Fig. 2 bzw. 3 schematisch dargestellt.

In der in Fig. 2 dargestellten Einbaulage ist die Ebene des Auffangnetzes in Flussrichtung 7 um einen Winkel 10 nach vorne geneigt, wobei die Neigung aus der Vorverlegung der Seilanker 9 relativ zu den Seilankern 8 resultiert. Der Winkel 10 ist so gewählt, dass das Auffangnetz 4 bei gefüllter Sperre eine Verformung erfährt, bei der, wie aus Fig. 3 ersichtlich, dann das überfliessende Material das Auffangnetz 4 talseitig nur geringfügig überspült. Der Winkel 10 beträgt vorzugsweise zwischen 10° und 30° (oder sogar 45°), je nach Beschaffenheit des Auffangnetzes und je nach den Einsatzbedingungen der Sperre.

Die Vorverlegung der Seilanker 9 relativ zu den Seilankern 8 ist eine einfache Massnahme, die keinen zusätzlichen konstruktiven und bautechnischen Aufwand gegenüber den vorbekannten Sperren verursacht. Wie aus Fig. 4 ersichtlich, ist bei diesen das Auffangnetz 4 in seiner Einbaulage vor Befüllen der Sperre senkrecht zwischen den Tragseilen aufgespannt. Dadurch verformt sich das Auffangnetz bei gefüllter Sperre in der Weise, dass, wie auf Fig. 5 ersichtlich, das dann überfliessende Material das Auffangnetz 4 talseitig in einem grösseren Umfang überspült. Dies hat längerfristig zur Folge, dass das Auffangnetz durch die Korrosions- und Abrasionswirkung des ihn überspülenden Materials beschädigt wird.

Bei der erfindungsgemässen Verbauungsvorrichtung kann man dagegen das Auffangnetz mit einer einfachen Massnahme, nämlich die Vorverlegung der oberen Seilanker relativ zu den unteren Seilankern, wirksam vor Korrosion und Abrasion dauerhaft schützen. Damit kann die Anlage länger betriebsfähig bleiben und sicherer arbeiten.

Die erfindungsgemässe Massnahme ist ohne weiteres auch bei vorhandenen Sperren nachträglich anwendbar.

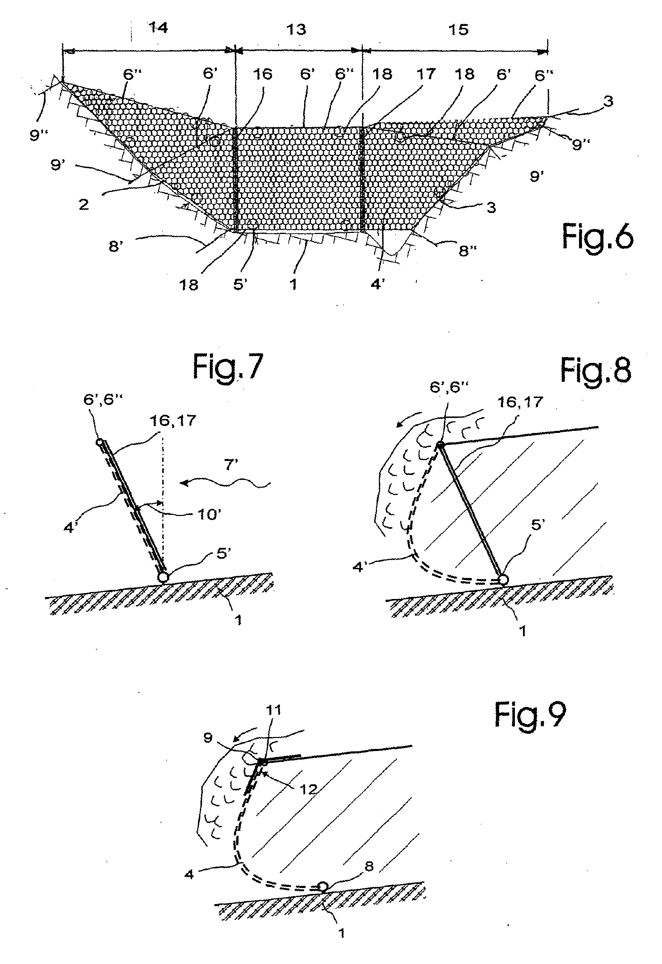

Zum besseren Schutz der Systemelemente im oberen Bereich der Sperre ist ein Überfallschutz in Gestalt eines abgekanteten Blechprofils 11 vorgesehen, das, wie aus Fig. 9 ersichtlich, über dem oberen Randbereich 12 des Auffangnetzes 4 montiert ist. Der Überfallschutz sorgt dafür, dass bei gefüllter Sperre das überfliessende Material das Auffangnetz 4 talseitig nicht tangiert. Der Überfallschutz wird vorzugsweise bei gefüllter Sperre auf den oberen Rand des Auffangnetzes aufgesetzt, womit dort auch das obere Tragseil 9 mitgeschützt ist.

Die in den Fig. 6 bis 8 gezeigte Verbauungsvorrichtung unterscheidet sich von der Verbauungsvorrichtung nach den Fig. 1 bis 3 im wesentlichen dadurch, dass ihr Auffangnetz 4 in einer mittleren Zone 13 und zwei diese zum Ufer hin zunehmend überragenden Uferzonen 14, 15 unterteilt ist. Das Auffangnetz 4' ist zwischen einem unteren Tragseil 5' und zwei oberen Tragseilen 6', 6" aufgespannt. Die Tragseile sind in den Uferflanken 2', 3' mit an ihren Enden angebrachten Seilankern 8' bzw. 9', 9" verankert.

In der mittleren Zone 13 des Auffangnetzes 4' sind die oberen Tragseile 6', 6" horizontal mit einer Doppelseilführung bestehend aus zwei Stützen 16, 17 zusammengeführt, welche die mittlere Zone 13 in ihrer Breite definieren. Die Tragseile 5', 6', 6" sind mit Bremselementen 18 zum Absorbieren von dynamischen Energien ausgestattet, welche bei hohen Belastungen eine Seilverlängerung ermöglichen.

Wie aus Fig. 7 ersichtlich, sind die Stützen 16, 17 so angeordnet, dass sie in Flussrichtung 7' relativ zur Vertikale nach vorne geneigt sind. Dabei ist der Neigungswinkel 10' so gewählt, dass bei gefüllter Sperre das Auffangnetz 4' in der mittleren Zone 13 eine Verformung erfährt, bei der, wie aus Fig. 8 ersichtlich, das überfliessende Material das Auffangnetz 4' in dieser Zone nur geringfügig überspült. Auf diese Weise kann das Auffangnetz 4' gezielt im Bereich des Netzes geschützt werden, das bei Ü-Überlaufen der Sperre der stärksten Abrasionswirkung ausgesetzt ist. Der Neigungswinkel 10' beträgt vorzugsweise zwischen 10° und 20°, je nach dem Flexibilitätsgrad des Auffangnetzes und den Einsatzbedingungen der Anlage.

Die erfindungsgemässe Massnahme, die Stützen mit einer Neigung relativ zur Vertikale zu versehen, ist auch ohne weiteres bei vorhandenen Anlagen nachträglich anwendbar.

Bei den beiden beschriebenen Verbauungsvorrichtungen ist das Auffangnetz 4 bzw. 4' als Ring- oder Spiralseilnetz ausgebildet. Es ist aber im Rahmen der Erfindung selbstverständlich möglich, auch andersartige flexible Barrieren, wie Omega- und Seilnetze zu verwenden.

Es ist auch im Rahmen der Erfindung möglich, die besonders abrasionsgefährdeten Teile im oberen Netzrand, insbesondere die Tragseile 6, 6' mit Abrasionsschutzteilen in Gestalt von Schutzrohren oder aufgesetzten Profilen aus Stahl, Eisen oder Kunststoffen zu versehen. Bei Verwendung metallener Schutzrohre oder Profile können diese vorteilhafterweise mit einer Verzinkung oder speziellen Abrasionsschutzanstrichen versehen sein. Die Schutzrohre sind leicht austauschbar und somit als Nachrüst- Schutzteile verwendbar. Sie können auch mittels weiterer Schutzrohre oder dergleichen verstärkt werden.

## Patentansprüche

1. Verbauungsvorrichtung für fliessende Gewässer und Gerinne jeglicher Art, insbesondere für Wildbäche und ähnliche Flussläufe, mit einem flexiblen Sperrelement (4) für Geschiebe-, Schwimm- und Treibgut, das zwischen den Uferflanken (2, 3) quer zur Flussrichtung aufgespannt ist, **dadurch gekennzeichnet, dass**
das flexible Sperrelement (4) sich beim Befüllen der Sperre so verformt, dass bei gefüllter Sperre das überfliessende Material das Sperrelement talseitig nicht oder nur geringfügig überspült.

2. Verbauungsvorrichtung nach Anspruch 1 mit einem das Sperrelement bildenden Auffangnetz (4), das zwischen einem oder mehreren unteren und einem oder mehreren oberen Tragseile (5 bzw. 6) quer zur Flussrichtung (7) aufgespannt ist, wobei das oder die Tragseile (5, 6) in den Uferflanken (2, 3) mit an ihren Enden angebrachten Seilankern oder anderen Seilverankerungen (8 bzw. 9) verankert sind, **dadurch gekennzeichnet, dass** die Seilanker (9) des oder der oberen Tragseile (6) relativ zu den Seilankern oder anderen Seilverankerungen (8) des oder der unteren Tragseile (5) in Flussrichtung (7) nach vorne versetzt sind.

3. Verbauungsvorrichtung nach Anspruch 2, **dadurch gekennzeichnet, dass** die Seilanker oder anderen Seilverankerungen (9) des oder der oberen Tragseile (6) relativ zu den Seilankern oder anderen Seilverankerungen (8) der unteren Tragseile (5) soweit nach vorne versetzt sind, dass das unverformte, ebene Auffangnetz (4) um einen Winkel (10) von vorzugsweise 10° bis 45° in Flussrichtung (7) nach vorne geneigt ist.

4. Verbauungsvorrichtung nach Anspruch 1 mit einem das Sperrelement bildenden Auffangnetz (4'), das eine mittlere Zone (13) und zwei diese zum Ufer hin zunehmend überragende Uferzonen (14, 15) aufweist und zwischen einem unteren und einem oberen Tragseil (5' bzw. 6') gegebenenfalls mit Zwischenseilen quer zur Flussrichtung (7) aufgespannt ist, wobei die Tragseile (5', 6') durch zwei die mittlere Zone (13) in der Breite begrenzende Stützen (16, 17) geführt sind, **dadurch gekennzeichnet, dass** die Stützen (16, 17) in Flussrichtung (7) relativ zur Vertikale nach vorne geneigt sind.

5. Verbauungsvorrichtung nach Anspruch 4, **dadurch gekennzeichnet, dass** die Stützbalken (16, 17) einen Neigungswinkel (10') von vorzugsweise 10° bis 30° aufweisen.

6. Verbauungsvorrichtung nach einem der Ansprüche 2 bis 5, **dadurch gekennzeichnet, dass** über den oberen Randbereich des Auffangnetzes (4) ein Überfallschutz (11) aufsetzbar ist, welcher verhindert, dass das überströmende Geschiebe das Auffangnetz talseitig tangiert.

7. Verbauungsvorrichtung nach Anspruch 6, **dadurch gekennzeichnet, dass** der Überfallschutz durch ein über dem oberen Randbereich des Auffangnetzes (4) montiertes, abgekantetes Blechprofil (11) oder an das die oberen Tragseile angehängtes Schutzblech gebildet ist.

8. Verbauungsvorrichtung nach einem der Ansprüche 2 bis 7, **dadurch gekennzeichnet, dass** den im oberen Randbereich des Auffangnetzes (4) abrasionsgefährdeten Vorrichtungselementen und insbesondere dem oberen Tragseil (6) vorzugsweise mit einem speziellen Abrasionsschutzanstrich versehene Abrasionsschutzteile zugeordnet sind.

9. Verbauungsvorrichtung nach Anspruch 8, **dadurch gekennzeichnet, dass** die Abrasionsschutzteile als austauschbare Schutzrohre oder Schutzprofile ausgebildet sind.

10. Verbauungsvorrichtung nach Anspruch 8, **dadurch gekennzeichnet, dass** die Abrasionsschutzteile nachträglich aufsetzbar und auch verstärkbar sind.
